# DEMANDE DE BREVET EUROPEEN

(11) **EP 2 023 402 A1**
(43) Date de publication de la demande: **11.02.2009**
(21) Numéro de dépôt: 08305425.4
(22) Date de dépôt: 28.07.2008
(51) Int. Cl.: H01L 31/042, F24J 2/52, E04D 13/18

(54) **Profilé et dispositif de montage de panneaux photovoltaïques au sein d'une structure de bâtiment, et notamment d'une toiture, et structure de bâtiment intégrant ces éléments**

(30) Priorité: 01.08.2007 FR 0705622
(71) Demandeur: Tenesol, 69890 La Tour de Salvagny (FR)
(72) Inventeur: Olivier, Guy, 69270, SAINT GENIS LES OLLIERES (FR); Maureau, Stéphane, 69001, LYON (FR)
(74) Mandataire: Vuillermoz, Bruno

(57) **Abrégé**

Ce profilé de montage de panneaux photovoltaïques (2) au sein d'une structure de bâtiment, et notamment d'une toiture définit une embase (10) pour sa fixation à un élément de la dite structure, et notamment à la charpente (1) de la toiture, ainsi qu'un pied longitudinal (22) de support d'au moins deux panneaux photovoltaïques adjacents (2).

Le profilé délimite de chaque côté du pied de support (22) deux rigoles longitudinales d'écoulement (27) orientées selon la direction opposée à l'embase (10).

## Description

### DOMAINE TECHNIQUE

La présente invention se rapporte au domaine des bâtiments auxquels sont intégrés des panneaux photovoltaïques de production d'énergie électrique à partir du rayonnement solaire.

Plus précisément, l'invention concerne un profilé et un dispositif de montage de tels panneaux photovoltaïques au sein d'un élément d'une structure de bâtiment, et notamment d'une toiture. Elle concerne également une structure de bâtiment, et notamment une toiture dont au moins deux panneaux photovoltaïques voisins sont montés par l'intermédiaire d'un exemplaire de ce profilé.

### ART ANTERIEUR

Un ensemble de panneaux photovoltaïques produit d'autant plus d'électricité que la surface qu'il couvre est étendue et exposée au rayonnement solaire. Les toitures offrent de telles surfaces si bien qu'il est désormais courant d'installer des panneaux photovoltaïques au niveau de toitures de bâtiments, tels que des maisons, des bureaux, des locaux d'enseignement ou des ateliers, qui peuvent abriter les équipements électriques de transformation de l'électricité produite par les panneaux en énergie électrique utilisable.

Les panneaux photovoltaïques équipant un bâtiment peuvent être soutenus au dessus de la toiture de ce bâtiment, par une structure extérieure telle que celle décrite dans le document US-2005/0166383. Ils peuvent également être intégrés à la toiture du bâtiment de manière à être ainsi moins visibles.

Lorsque tel est le cas, une étanchéité est prévue entre les panneaux photovoltaïques et la charpente de la toiture. Cette étanchéité peut être le fait de plaques, qui supportent les panneaux photovoltaïques et qui se chevauchent tout en étant orientées de manière que leurs ondulations soient sensiblement parallèles à la plus grande pente de la toiture, comme le propose le document EP-1 310 747. De telles plaques ondulées sont lourdes, encombrantes et difficiles à installer.

Dans le document DE-20 2005 015 455, on a décrit une autre solution, selon laquelle l'étanchéité entre les panneaux photovoltaïques et la charpente du bâtiment est réalisée par une membrane recouvrant la face supérieure de plaques planes sous-jacentes. A ces plaques planes sont fixés plusieurs profilés dont chacun supporte une ou plusieurs paires de panneaux photovoltaïques voisins. Comme les plaques ondulées mentionnées précédemment, les plaques recouvertes de la membrane sont encombrantes, lourdes et difficiles à installer. En outre, la pose de cette membrane constitue une opération délicate qui peut conduire à une mauvaise étanchéité si elle est mal réalisée. Un défaut d'étanchéité de la toiture peut également résulter de déchirures ou d'autres perforations de la membrane.

Dans tous les cas, un tel défaut d'étanchéité ne peut pas être décelé par un rapide examen visuel de la toiture, sans un démontage préalable des panneaux photovoltaïques, puisque ces derniers en masquent l'origine.

### EXPOSE DE L'INVENTION

L'invention a tout d'abord pour but de faciliter le montage de panneaux photovoltaïques intégrés à une toiture, et de manière générale, à une structure d'un bâtiment, quelle qu'en soit sa destination.

Selon l'invention, ce but est atteint au moyen d'un profilé, notamment allongé, de montage de panneaux photovoltaïques. Ce profilé définit une embase pour sa fixation à un élément de la structure d'un bâtiment, et notamment à une charpente de la toiture, ainsi qu'un pied longitudinal de support d'au moins deux panneaux photovoltaïques adjacents. Il est **caractérisé en ce que**, de chaque côté du pied de support, le profilé délimite deux rigoles longitudinales d'écoulement ou de drainage, qui sont orientées selon une direction opposée à l'embase.

Chacune de ces deux rigoles est à même d'évacuer des eaux pluviales qui se sont éventuellement infiltrées entre le pied du profilé et un panneau photovoltaïque. Aussi, il n'est plus nécessaire de prévoir une étanchéité sous les anneaux photovoltaïques, dont le montage est de ce fait simplifié.

Avantageusement, le pied de support est muni de moyens de fixation, notamment réversible, d'une structure inférieure.

Cette structure inférieure peut être constituée, par exemple, d'un organe de sécurité, de type filet, propre à s'opposer à la chute de débris susceptibles de résulter de la rupture d'un ou de panneaux photovoltaïques. Mais elle peut également est constituée d'un élément à vocation esthétique et/ou décorative.

Avantageusement, le pied de support comporte deux nervures longitudinales en regard, chacune pour le support au moins de l'un des deux panneaux photovoltaïques voisins.

Avantageusement, le profilé comporte une paroi transversale de renforcement qui relie au moins les deux nervures du pied de support l'une à l'autre, cette paroi transversale et au moins une portion de l'embase faisant partie d'un ensemble de parois se reliant rigidement deux à deux les unes aux autres. Lorsque tel est le cas, le profilé est robuste, tout en restant léger et peu coûteux.

Avantageusement, le profilé comporte des première et deuxième parois longitudinales dont chacune délimite partiellement l'une des deux rigoles d'écoulement, d'un côté du pied de support.

Avantageusement, à l'opposé de l'embase, chacune desdites première et deuxième parois longitudinales définit une surface d'appui au moins pour l'un des deux panneaux photovoltaïques adjacents, à distance du pied de support. De la sorte, les parois longitudinales participent au support des panneaux photovoltaïques, en plus de délimiter les rigoles d'écoulement.

Avantageusement, chacune des première et deuxième parois longitudinales comporte une zone de flexion autorisant sa déformation élastique dans le sens d'un écrasement vers l'embase. Une telle zone de flexion offre une tolérance dans le positionnement des panneaux photovoltaïques par rapport au profilé de montage.

L'invention a également pour objet un dispositif de montage de panneaux photovoltaïques au sein d'une toiture. Celui-ci se caractérise en ce qu'il comprend un profilé qui est tel que défini précédemment, et dont le pied est pourvu d'au moins un joint longitudinal d'étanchéité pour l'appui au moins de l'un des deux panneaux photovoltaïques adjacents.

Avantageusement, ce dispositif de montage comporte un mors et un organe de serrage d'une bordure de l'un au moins des panneaux photovoltaïques adjacents entre ce mors et le pied du profilé.

L'invention a encore pour objet une structure de bâtiment, et notamment une toiture, comportant plusieurs panneaux photovoltaïques. Cette structure de bâtiment se **caractérise en ce qu**'elle comporte au moins un profilé tel que défini précédemment, et dont le pied supporte partiellement au moins deux panneaux photovoltaïques adjacents, le long d'un bord de chacun de ces deux panneaux photovoltaïques, et qui est incliné de manière que les deux rigoles de ce profilé puissent évacuer par gravité des eaux pluviales.

Avantageusement, les deux panneaux photovoltaïques adjacents sont en appui respectivement sur la première paroi longitudinale et sur la deuxième paroi longitudinale.

Avantageusement, la structure du bâtiment, et notamment la toiture comporte au moins un joint allongé de jonction étanche délimitant deux gorges dont chacune est tournée dans la direction opposée à l'autre gorge et qui s'étendent selon la longueur de ce joint de jonction étanche, chaque gorge recevant à joint étanche un bord de l'un de deux panneaux photovoltaïques adjacents entre lesquels est disposé le joint de jonction étanche. Un tel joint assure une très bonne étanchéité, tout en offrant une tolérance pour le montage des panneaux photovoltaïques.

### DESCRIPTION SOMMAIRE DES FIGURES

L'invention sera bien comprise à la lecture de la description qui va suivre, donnée uniquement à titre d'exemple et réalisée en se référant aux dessins annexés, parmi lesquels :
- la figure 1 est une vue schématique partielle du dessus d'une toiture conforme à l'invention et partiellement démontée ;
- la figure 2 est une vue schématique partielle en section selon la ligne II-II de la figure 1, illustrant notamment deux panneaux photovoltaïques adjacents que supporte partiellement un profilé de montage selon un premier mode de réalisation de l'invention ;
- la figure 3 est une vue schématique partielle en section selon la ligne III-III de la figure 1 ; et
- la figure 4 est une vue schématique de l'extrémité d'un profilé de montage selon un deuxième mode de réalisation de l'invention.

### MODES DE REALISATION DE L'INVENTION

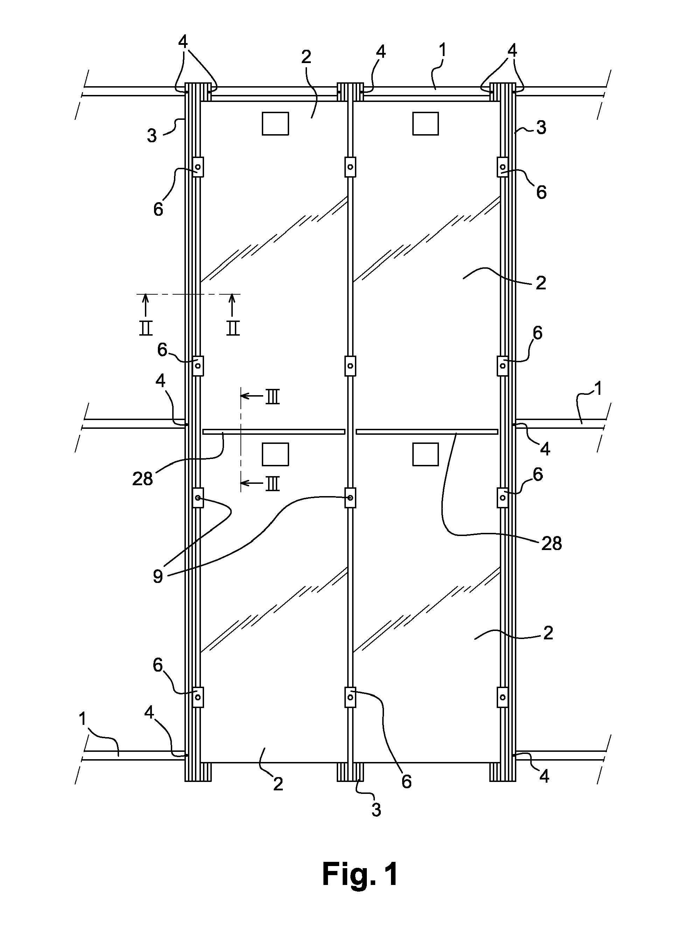

Sur la figure 1 sont partiellement représentées trois pannes sensiblement horizontales **1** d'une charpente. Cette charpente fait partie d'une toiture, dont la couverture comporte plusieurs panneaux photovoltaïques **2** supportés par des profilés obliques **3** selon un premier mode de réalisation de l'invention. Sur la figure 1, plusieurs panneaux photovoltaïques **2** ont été démontés dans un souci de clarté.

Les profilés **3** sont disposés sensiblement dans le sens de la plus grande pente de la toiture, orthogonalement aux pannes **1,** sur plusieurs desquels chacun d'entre eux est fixé au moyen d'organes de solidarisation tels que des vis auto-foreuses **4.**

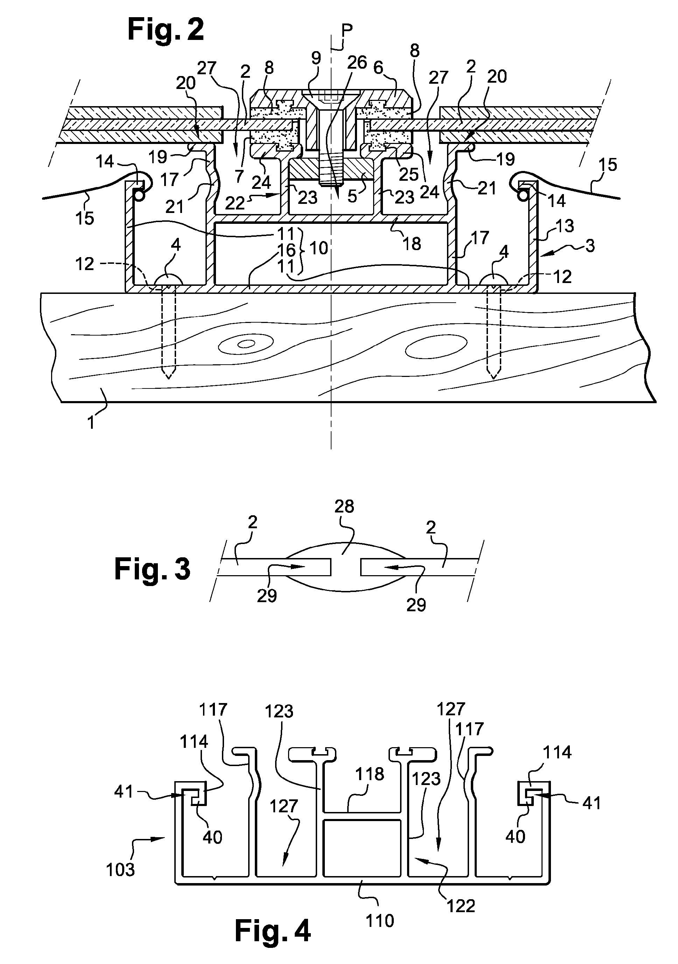

Ainsi qu'on peut le voir à la figure 2, chaque profilé **3** fait partie d'un dispositif de montage qui comporte en outre des paires de mors inférieurs **5** et supérieurs **6,** des paires de joints longitudinaux **7** et **8**, ainsi que des vis **9** de serrage de bordures de panneaux photovoltaïques **2** entre un joint inférieur **7** et un joint supérieur **8.**

Chaque profilé **3** est sensiblement symétrique par rapport à un plan vertical **P** et comporte une embase **10** pour son montage et sa fixation sur les pannes **1.** Cette embase **10** comporte deux ailes latérales et longitudinales **11,** dont chacune est percée de plusieurs orifices traversants **12** pour permettre le passage des vis auto-foreuses **4.** Chaque aile **11** comporte une portion verticale **13** pourvue d'un rebord longitudinal **14** pour l'accrochage d'un filet **15,** le cas échéant mis en oeuvre dans le cadre de la manipulation ou de la mise en place des panneaux photovoltaïques, et susceptible en outre de récupérer les débris susceptibles de résulter du bris ou de la rupture d'un ou plusieurs panneaux phovoltaïques **2.** L'embase **10** comprend également une portion intermédiaire **16** que prolongent les ailes latérales **11,** et à partir de laquelle s'étendent vers le haut deux parois longitudinales **17** reliées l'une à l'autre par une paroi transversale **18,** susceptible de jouer le rôle de renfort du profilé.

A l'opposé de l'embase **10,** chaque paroi **17** se termine par un rebord **19** définissant une surface **20** d'appui d'un panneau photovoltaïque **2.** Entre le rebord **20** et la paroi transversale **18,** chaque paroi longitudinale **17** comporte une zone courbe de flexion **21,** qui lui confère une capacité de déformation élastique dans le sens d'un écrasement vers l'embase **10.**

La paroi transversale **18** supporte un pied **22** en deux parties, dont chacune présente la forme d'une nervure **23** pourvue d'un rebord **24** de montage et d'appui d'un joint inférieur **7.** Chaque joint **7** est pourvu d'un talon de section transversale en T, retenu dans une gorge de forme complémentaire **25** ménagée dans un rebord **24.**

Les deux nervures **23** d'un pied **22** délimitent entre elles une rigole d'écoulement **26,** dont la paroi transversale **18** forme le fond. Cette paroi transversale **18** forme également le fond de deux autres rigoles d'écoulement **27,** qui longent le pied **22** et dont chacune est délimitée latéralement par la nervure **23** précitée, et par une paroi longitudinale **17,** d'un côté de ce pied **22.**

Chaque profilé **3** et deux joints inférieurs **7** l'équipant supportent latéralement, en partie, deux panneaux photovoltaïques **2** adjacents, dont chacun repose également sur le joint inférieur **7** porté par une nervure **23** d'un autre profilé **3.** Le support des panneaux photovoltaïques **2** résulte également des parois longitudinales **16.**

Au niveau d'un profilé **3,** une bordure de chaque panneau photovoltaïque **2** supporté par ce profilé **3** est immobilisée par un serrage entre un joint inférieur **7** et un joint supérieur **8.** Une vis **9** vissée dans un trou taraudé du mors inférieur **5** est à l'origine de ce serrage, qui s'exerce sur les joints **7** et **8** par l'intermédiaire du mors supérieur **6** et d'un rebord **24.**

Le joint inférieur **7** est plus précisément un joint longitudinal qui s'étend sur toute la longueur du pied **22** et qui assure une étanchéité entre un ou plusieurs panneaux photovoltaïques **2** et le profilé **3,** c'est-à-dire entre l'intérieur de la toiture et l'extérieur. En cas de défaillance de cette étanchéité, de l'eau peut s'infiltrer le long du pied **22,** auquel cas elle est recueillie et évacuée par gravité par une rigole **27,** sans pouvoir atteindre la charpente de la toiture.

En d'autres termes, les rigoles **27** assurent une sécurité en cas de fuite le long d'un des joints inférieurs **7,** en sorte qu'il n'est plus nécessaire de disposer une membrane d'étanchéité entre les profilés **3** et la charpente de la toiture.

Sur la figure 3 est représenté un joint **28** réalisant une jonction étanche entre deux panneaux photovoltaïques **2** adjacents, qui sont disposés à la suite l'un de l'autre dans le sens de la pente de la toiture. Ce joint **28** est allongé de manière à pouvoir s'étendre entre deux bords en regard de ces panneaux photovoltaïques **2**. Il présente une section transversale en H et délimite deux gorges longitudinales **29,** dont chacune est orientée à l'opposé de l'autre, et dans chacune desquelles est engagé un bord d'un panneau photovoltaïque **2.**

L'assemblage de la couverture de toiture comportant les panneaux photovoltaïques **2** est d'autant plus aisé à réaliser qu'il ne nécessite pas l'installation de plaques lourdes et encombrantes ni de membranes d'étanchéité fragiles et susceptibles d'être perforées, entre les pannes 1 et les panneaux photovoltaïques **2**. Il est également facilité par les tolérances offertes dans le placement des panneaux photovoltaïques **2** les uns par rapport aux autres.

Sur la figure 4 est représenté un profilé **103** selon un deuxième mode de réalisation de l'invention. Dans ce qui suit, on ne décrit que ce qui le distingue du profilé **3.** En outre, une référence utilisée ci-après pour désigner une partie du profilé **103** semblable ou équivalente à une partie référencée du profilé **3** est construite en ajoutant **100** à la référence repérant cette partie dans le profilé **3.**

Chaque rebord **114** comporte un retour **40** de manière à délimiter une gorge intérieure **41** qui est tournée vers la portion verticale **113** portant ce rebord **114** et qui est destinée à recevoir la bordure d'un filet **15.**

La paroi transversale **118** ne relie que les nervures **123** du pied **122** et s'arrête avant d'avoir atteint les parois longitudinales **117**. Aussi, le fond des rigoles **127** est formé par l'embase **110,** sur laquelle se raccordent directement les nervures **123.**

Avantageusement, les différents profilés sont réalisés en aluminium, notamment par filière.

## Revendications

1. Profilé de montage de panneaux photovoltaïques (2) au sein d'une structure de bâtiment, et notamment d'une toiture, ce profilé définissant une embase (10 ; 110) pour sa fixation un élément de la dite structure, et notamment à la charpente (1) de la toiture, ainsi qu'un pied longitudinal (22 ; 122) de support d'au moins deux panneaux photovoltaïques adjacents (2), et délimitant deux rigoles longitudinales d'écoulement (27 ; 127) de chaque côté du pied de support (22 ; 122), orientées selon la direction opposée à l'embase (10 ; 110), le profilé comportant des première et deuxième parois longitudinales (17 ; 117) dont chacune délimite partiellement l'une des deux rigoles d'écoulement (27 ; 127), d'un côté du pied de support (22 ; 122), ***caractérisé* en ce qu'**à l'opposé de l'embase (10 ; 110), chacune desdites première et deuxième parois longitudinales (17 ; 117) définit une surface d'appui (20) au moins pour l'un des deux panneaux photovoltaïques adjacents (2), à distance du pied de support (22 ; 122).

2. Profilé selon la revendication 1, ***caractérisé* en ce que** le pied de support (22 ; 122) est muni de moyens de fixation, notamment réversible, d'une structure inférieure.

3. Profilé selon la revendication 2, ***caractérisé* en ce que** la structure inférieure est constituée d'un organe de sécurité (15) propre à s'opposer à la chute de débris susceptibles de résulter de la rupture d'un ou de panneaux photovoltaïques (2) ou d'un élément à vocation esthétique et/ou décorative.

4. Profilé selon l'une des revendications 1 à 3, ***caractérisé* en ce que** le pied de support (22 ; 122) comporte deux nervures longitudinales en regard (23 ; 123), chacune destinée à faire fonction de support de l'un des deux panneaux photovoltaïques adjacents (2).

5. Profilé selon la revendication 4, ***caractérisé* en ce qu'**il comporte une paroi transversale (18 ; 118) qui relie au moins les deux nervures (23 ; 123) du pied de support (22 ; 122) l'une à l'autre, cette paroi transversale (18 ; 118) et au moins une portion (16) de l'embase faisant partie d'un ensemble de parois se reliant rigidement deux à deux les unes aux autres.

6. Profilé selon l'une quelconque des revendications précédentes, ***caractérisé* en ce que** chacune des première et deuxième parois longitudinales (17 ; 117) comporte une zone de flexion (21) autorisant sa déformation élastique dans le sens d'un écrasement vers l'embase (10 ; 110).

7. Dispositif de montage de panneaux photovoltaïques (2) au sein d'une structure de bâtiment, et notamment d'une toiture, ***caractérisé* en ce qu'**il comprend un profilé (3 ; 103) selon l'une quelconque des revendications précédentes, et dont le pied (22 ; 122) est pourvu d'au moins un joint longitudinal d'étanchéité (7) pour l'appui au moins de l'un des deux panneaux photovoltaïques adjacents (2).

8. Dispositif selon la revendication 7, ***caractérisé* en ce qu'**il comporte un mors (6) et un organe (9) de serrage d'une bordure de l'un au moins des panneaux photovoltaïques adjacents (2) entre ce mors (6) et le pied (22 ; 122) du profilé (3 ; 103).

9. Structure de bâtiment, et notamment toiture comportant plusieurs panneaux photovoltaïques (2), ***caractérisée* en ce qu'**elle comporte au moins un profilé (3) selon l'une quelconque des revendications 1 à 6, qui supporte partiellement au moins deux panneaux photovoltaïques adjacents le long d'un bord de chacun de ces deux panneaux photovoltaïques (2), ledit profilé étant orienté et incliné de manière que les deux rigoles (27 ; 127) de ce profilé (3) puissent évacuer par gravité des eaux pluviales.

10. Structure de bâtiment selon la revendication 9, ***caractérisée* en ce que** l'un et l'autre panneau photovoltaïques adjacents (2) sont en appui respectivement sur la première paroi longitudinale (17 ; 117) et sur la deuxième paroi longitudinale (17 ; 117).

11. Structure de bâtiment selon l'une quelconque des revendications 9 et 10, ***caractérisée* en ce qu'**elle comporte au moins un joint allongé de jonction étanche délimitant deux gorges (29), dont chacune est orientée dans la direction opposée à l'autre gorge (29), et qui s'étendent selon la longueur de ce joint de jonction étanche (28), chaque gorge (29) recevant à joint étanche un bord de l'un de deux panneaux photovoltaïques voisins (2) entre lesquels est disposé le joint de jonction étanche (28).
